# EUROPÄISCHE PATENTSCHRIFT

(11) **EP 4 398 206 B1**
(45) Veröffentlichungstag und Bekanntmachung des Hinweises auf die Patenterteilung: **11.06.2025**
(21) Anmeldenummer: 23150386.3
(22) Anmeldetag: 05.01.2023
(51) Int. Cl.: G07C 3/10, B65B 13/02, G08C 17/02, G05B 19/418

(54) **UMREIFUNGSBANDVORRICHTUNG**
STRAPPING BAND DEVICE
DISPOSITIF DE CERCLAGE

(43) Veröffentlichungstag der Anmeldung: 10.07.2024
(73) Patentinhaber: TITAN Umreifungstechnik GmbH & Co.KG, 58332 Schwelm (DE)
(72) Erfinder: Nölke, Christian, 40627 Düsseldorf (DE); Protzmann, Bastian, 42289 Wuppertal (DE); Wu, Tianhao, 58332 Schwelm (DE)
(74) Vertreter: Andrejewski - Honke Patent- und Rechtsanwälte Partnerschaft mbB

(56) Entgegenhaltungen:
- US-A1- 2016 148 501
- US-A1- 2022 297 861

## Beschreibung

Die Erfindung betrifft eine Vorrichtung nach Anspruch 1.

Umreifungsbandvorrichtungen werden typischerweise eingesetzt, um beispielsweise Stahlumreifungsbänder um Metallbandcoils zu wickeln und zu verschließen, um die fraglichen Metallbandcoils zu sichern. Alternativ hierzu können Umreifungsbandvorrichtungen aber auch genutzt werden, um beispielsweise Kunststoffumreifungsbänder um Papier- oder Stoffballen zu legen und nach einem Verschluss ihrer Enden für eine entsprechende Sicherung des Stoff- oder Papierballens zu sorgen. Dabei kommen sowohl stationäre Umreifungsbandvorrichtungen als auch mobile Handumreifungsbandvorrichtungen zum Einsatz, die von einer Bedienperson betätigt werden.

Der Umreifungskopf sorgt dabei jeweils dafür, dass das Umreifungsband gespannt und die zu verbindenden Enden des Stahlbandes oder auch des Kunststoffbandes miteinander gekoppelt werden. Das kann bei Stahlbändern durch beispielsweise Crimpen oder bei Kunststoffbändern durch eine Reibschweißverbindung erfolgen. Im erstgenannten Fall ist der Umreifungkopf mit einem Crimpstempel ausgerüstet, der mithilfe des Antriebes verfahren wird und für die entsprechende Vercrimpung sorgt. Im Falle einer Reibschweißverbindung stellt der Antrieb eine reibende Hin- und HerBewegung von Reibflächen im Bereich zu verbindender Bandenden der Kunststoffumreifungsbänder sicher.

Der zuvor beispielhaft beschriebene Crimpstempel muss ebenso wie die Reibflächen in regelmäßigen Abständen gewartet werden, um seiner gewünschten Funktion nachzukommen und um einen einwandfreien Verschluss der Bandenden sicherzustellen. Das ist schon aus Sicherheitsgründen erforderlich. Aus diesem Grund hat man im Stand der Technik Umreifungsbandvorrichtungen bereits mit einer Art Zählwerk ausgerüstet, um Informationen über Bearbeitungszyklen zu erhalten. Das wird unter anderem in der CN 204068576 U beschrieben. Dort ist ein Permanentmagnet auf einer Antriebswelle eines Antriebsmotors im Innern des Umreifungskopfes realisiert. Sobald der Antriebsmotor rotiert, lassen sich Zählimpulse erzeugen und kann die Anzahl der Motorumdrehungen ermittelt werden.

Vergleichbar geht die CN 208806716 U vor. Auch in diesem Fall wird die Rotation eines Antriebsmotors im Innern des Umreifungskopfes erfasst. Dazu ist dem Antrieb erneut ein Sensor zugeordnet.

Im Rahmen der EP 1 471 005 B1 wird eine Kombination aus einer Umreifungsmaschine und einem Steuersystem für einen Schweißmotor beschrieben. Das Steuersystem weist einen Näherungssensor auf. Mithilfe des Sensors kann eine Drehung des mit einem Siegelglied wirkverbundenen Motors erfasst werden. Auf diese Weise lässt sich ein Signal zur Steuerung des Motors erzeugen.

Die gattungsbildende und nächstkommende US 2022/0297861 A1 beschäftigt sich mit einem Verfahren und einer Vorrichtung zur Bandumreifung. Sobald ein vorgegebenes Maß an Spannung erreicht ist, wird der Motor automatisch zurück gedreht. Außerdem wird in diesem Zusammenhang ganz generell die Kommunikation der beschriebenen Umreifungsbandvorrichtung mit einem mobilen Gerät, beispielsweise einem Smartphone eines Benutzers, angesprochen. Dadurch können Prozessdaten an den Nutzer übertragen werden.

Bei der US 2016/0148501 A1 geht es generell um Verfahren, Systeme und Vorrichtungen für drahtlose Kommunikation. Dabei beinhaltet eine Vorrichtung ein oder mehrere Sensoren. Außerdem einen Mikrocontroller und ein Drahtlosmodul, welches wahlweise in einem aktiven und Schlafmodus betrieben werden kann.

Die US 4 811 368 beschäftigt sich schließlich generell mit einem Sensor unter Rückgriff auf eine Radeinheit, der zur Drehzahlmessung i.V.m. elektrischen Antriebsmotoren eingesetzt werden kann.

Der Stand der Technik hat sich grundsätzlich bewährt, bietet jedoch noch Raum für Verbesserungen. So setzt die Erfassung von Zählsignalen eines Antriebsmotors am Umreifungskopf voraus, dass ein Bediener die Zählsignale überwacht und in Abhängigkeit hiervon etwaige Wartungsmaßnahmen ergreift oder initiiert. Dazu muss der Bediener über beispielsweise Zusatzerkenntnisse verfügen, ab welcher Anzahl an Zyklen des Antriebsmotors beispielsweise eine Wartung erforderlich ist oder empfohlen wird. Das setzt typischerweise das Wissen entsprechender Angaben in Handbüchern voraus, die regelmäßig nicht unmittelbar vorliegen oder greifbar sind. Aus diesem Grund werden notwendige Wartungsintervalle oftmals übersehen und kommt es zu vermeidbaren Betriebsausfällen. Hier will die Erfindung insgesamt Abhilfe schaffen.

Der Erfindung liegt das technische Problem zugrunde, eine derartige Umreifungsbandvorrichtung und insbesondere Handumreifungsbandvorrichtung so weiterzuentwickeln, dass eine durchgängige Funktionsfähigkeit gewährleistet ist.

Zur Lösung dieser technischen Problemstellung ist eine gattungsgemäße Umreifungsbandvorrichtung erfindungsgemäß dadurch gekennzeichnet, dass eine Auswerteeinheit vorgesehen ist, die an das als Internet ausgebildete Netzwerk angeschlossen ist und die im Speicher hinterlegte Prozessdaten verarbeitet, wobei die Auswerteeinheit im Bereich oder im Zugriff eines Herstellers der betreffenden Umreifungsbandvorrichtung angesiedelt ist.

Bei den mithilfe des Prozesssensors erfassten und übermittelten Prozessdaten handelt es sich typischerweise um Betriebsdaten wie beispielsweise die Anzahl der Zyklen bei einem Verschluss der Bandenden des Umreifungsbandes, die Temperatur des vorhandenen etwaigen motorischen Antriebes, unter Umständen den vom Antrieb aufgenommenen elektrischen Strom, einen Ladezustand der optional verbauten zugehörigen Batterie, den pneumatischen Druck bei einem pneumatischen Antrieb etc.

Um die Prozessdaten verschiedener Umreifungsbandvorrichtungen voneinander unterscheiden zu können, reflektieren diese zusätzlich eine Maschinenkennung, mit deren Hilfe die betreffende Umreifungsbandvorrichtung identifiziert werden kann. Sofern der optionale motorische Antrieb nicht auf elektrischem oder pneumatischem Wege beaufschlagt wird, sondern beispielsweise auf chemischen Weg und dazu entsprechende Verbrauchsmittel der erfindungsgemäßen Umreifungsbandvorrichtung bzw. dem motorischen Antrieb zugeführt werden müssen, spiegeln die Prozessdaten selbstverständlich auch und ganz generell solche Verbrauchsdaten wieder.

Alternativ oder zusätzlich können die Prozessdaten auch Verbrauchsdaten für das eingesetzte Umreifungsband reflektieren. Diese Verbrauchsdaten geben dann unter anderem Aufschluss über den jeweiligen Bandverbrauch an Umreifungsband der betreffenden Umreifungsbandvorrichtung. Mithilfe einer zusätzlich und wahlweise vorgesehenen Anzeigeeinheit lassen sich direkt an der Umreifungsbandvorrichtung einzelne oder sämtliche dieser ermittelten Prozessdaten visualisieren. Es versteht sich, dass je nach zu berücksichtigenden Prozessdaten nicht nur ein dem Antrieb zugeordneter Prozesssensor realisiert werden kann, sondern sich zusätzlich weitere Prozesssensoren in oder an der Umreifungsbandvorrichtung und konkret dem Umreifungskopf finden. So oder so stehen umfassend Prozessdaten der erfindungsgemäßen Umreifungsbandvorrichtung zur Verfügung, die im Sinne der drahtlosen Fernübertragung an den zugehörigen Empfänger übermittelt werden.

Der Empfänger kann sich dabei in unmittelbarer Nähe oder auch weit entfernt von der Umreifungsbandvorrichtung befinden. Hier sind beispielsweise auf ausladenden Betriebsgeländen Reichweiten von mehreren Kilometern bis hin zu 10 km und mehr möglich. Eine solche drahtlose Fernübertragung unter Berücksichtigung der angegebenen Reichweite lässt sich besonders vorteilhaft im Radiofrequenzbereich realisieren und umsetzen.

Tatsächlich arbeitet die Erfindung typischerweise im Sub-Gigahertz-Bereich von beispielsweise 800 MHz bis 950 MHz, der im Allgemeinen mit Radiofrequenzen belegt ist und folglich umsonst genutzt werden kann. D. h., durch den Rückgriff auf den Radiofrequenzbereich fallen zwischen der erfindungsgemäßen Umreifungsbandvorrichtung und dem Empfänger typischerweise keine Telekommunikationsgebühren an.

Das stellt einen großen Vorteil gegenüber internetfähigen Geräten im Zusammenhang mit der Realisierung einer lot (Internet of things)-Architektur dar, die nicht nur eine zugehörige Sim-Karte im betreffenden Gerät erfordern, sondern auch die Zahlung monatlicher Gebühren, wenn die Datenübertragung beispielsweise nach dem LTE-Standard erfolgen soll.

Da die erfindungsgemäße Umreifungsbandvorrichtung in der Regel mit einer Batterie bzw. einem aufladbaren Akku ausgerüstet ist, ist es darüber hinaus und vorteilhaft vorgesehen, dass die drahtlose Fernübertragung der Prozessdaten zum Empfänger in Abhängigkeit von Signalen eines Betätigungssensors erfolgt. Dieser Betätigungssensor ist zusätzlich zu dem einen oder den mehreren Prozesssensoren realisiert. Der Betätigungssensor ist dabei seinerseits an eine Steuereinheit mit Sender angeschlossen, welche nach Maßgabe seiner Signale geweckt wird und nach einer vorgegebenen Zeitspanne wieder in ihren Ruhemodus zurückkehrt. Dadurch wird die Batterie bzw. der an dieser Stelle verbaute aufladbare Akkumulator optimal vor unnötigen Entladungen geschützt.

Darüber hinaus stellt diese Vorgehensweise sicher, dass tatsächlich und erfindungsgemäß nur dann Strom verbraucht wird, wenn der Betätigungssensor seine Beaufschlagung an die Steuereinheit übermittelt. Das erfolgt typischerweise dann, wenn die Umreifungsbandvorrichtung bzw. ihr Umreifungskopf für einen Umreifungsvorgang bzw. den Verschluss von Bandenden herangezogen wird. Außerhalb dieser Betätigungszeiten befindet sich die Steuereinheit zusammen mit dem Sender im Ruhemodus. Gleiches gilt für den Antrieb. Dadurch wird keine unnötige elektrische Energie verbraucht.

Hierdurch ergibt sich ein weiterer Vorteil gegenüber beispielsweise mit einer Sim-Karte ausgerüsteten Geräten, weil in diesem Fall ständig Signale zwischen dem Sender und dem Empfänger ausgetauscht werden, welche letztlich das Vorhandensein der an dieser Stelle beispielhaft realisierten LTE-Verbindung quittieren. Auf einen solchen ständigen Datenaustausch wird erfindungsgemäß ausdrücklich verzichtet. Denn dieser Datenaustausch erfolgt nur dann, wenn über eine Betätigung der Umreifungsbandvorrichtung und damit des Betätigungssensors die Steuereinheit geweckt wird. Im Anschluss hieran kommt es zur drahtlosen Fernübertragung der Prozessdaten an den Empfänger. Sobald eine vorgegebene Zeitspanne verstrichen ist, beispielsweise eine halbe Minute oder 1 Minute, kehrt die Steuereinheit zusammen mit dem Sender wieder in ihren Ruhemodus zurück. Gleiches gilt für den etwaigen Antrieb.

Dabei versteht es sich, dass der der Steuereinheit zugeordnete Sender und der Empfänger aufeinander abgestimmt sind, nämlich nach vorteilhafter Ausgestaltung für die drahtlose Fernübertragung im Radiofrequenzbereich und insbesondere im Sub-Gigahertz-Bereich eingerichtet sind.

Die drahtlose Fernübertragung in dem fraglichen Radiofrequenzbereich wird dabei nach einem Modulationsverfahren durchgeführt. Auf diese Weise können die Prozessdaten unmittelbar und in Gestalt von Binärdaten übertragen und seitens des Empfängers gegebenenfalls weiterverarbeitet werden.

Tatsächlich erfolgt die drahtlose Fernübertragung vorteilhaft auf Basis gewobbelter Frequenzimpulse. Jeder gewobbelte Frequenzimpuls mag in diesem Zusammenhang zu einem Spreizfaktor von beispielsweise 5 bis 12 korrespondieren. Aufgrund des Spreizfaktors kann dann die Anzahl an übertragenden Bits vorgegeben werden. Der Spreizfaktor definiert in diesem Zusammenhang und wie allgemein üblich das Verhältnis der Zahl an jeweils einzelnen gespreizten Einzelkanälen für einen Nutzkanal., Typischerweise wird an dieser Stelle nach dem sogenannten LoRa-Standard (Long Range Area) gearbeitet, der eine Übertragungsrate von beispielsweise 0,3 Kbit/s bis 50 Kbit/s pro Kanal zur Verfügung stellt. Grundsätzlich können auch Raten um 1 Mbit/s und mehr realisiert werden.

Erfindungsgemäß ist der Empfänger, welcher die vom Sender der Umreifungsbandvorrichtung übermittelten Prozessdaten aufnimmt, mit dem Speicher für die Prozessdaten ausgerüstet. Außerdem ist der Empfänger inklusive Speicher als Bestandteil des als Internet ausgebildeten Netzwerkes ausgebildet. Die vom Empfänger aufgenommenen Prozessdaten könne folglich über das Netzwerk bzw. Internet an die Auswerteeinheit übertragen werden. In der Auswerteeinheit kann nun anhand der Prozessdaten festgestellt werden, ob beispielsweise eine Wartung erforderlich ist und bejahendenfalls wann.

Darüber hinaus kann mithilfe der Auswerteeinheit ermittelt werden, ob beispielsweise ein Austausch der Umreifungsbandvorrichtung oder eine generelle Revision empfehlenswert ist. Außerdem lassen sich Aussagen über den Verbrauch an Umreifungsband ebenso wie beispielsweise die Belastungen des optionalen Antriebes treffen.

Die Prozessdaten werden dabei im Allgemeinen drahtlos und/oder drahtgebunden über das Netzwerk übertragen. Dabei liegen die Prozessdaten typischerweise als Netzwerkprotokolle vor, können beispielsweise entsprechend dem TCP (Transmission control protocoll) oder auch nach dem UTP (User Datagramm protocoll) übertragen werden. Hierbei handelt es sich um verbindungsorientierte sowie paketvermittelnde Netzwerkprotokolle, die regelmäßig für eine Ende- zu Ende-Verbindung zwischen zwei Netzwerkteilnehmer, nämlich dem Empfänger und der Auswerteeinheit, für den Transport der Prozessdaten eingesetzt werden.

Die Umreifungsbandvorrichtung bzw. der zugehörige Umreifungskopf kann darüber hinaus neben dem Prozesssensor und dem Betätigungssensor zusätzlich noch mit einem GPS-sensor (Global positioning System) ausgerüstet werden. Auf diese Weise besteht die Möglichkeit, den betreffenden Umreifungskopf beispielsweise auf einem großflächigen Betriebsgelände orten zu können. Dazu sind typischerweise auf dem fraglichen Betriebsgelände mehrere Empfänger für die vom Sender der Umreifungsbandvorrichtung ausgesandten Prozessdaten verteilt angeordnet. Die genaue Position der betreffenden Umreifungsbandvorrichtung bzw. des Umreifungskopfes kann nun beispielsweise durch ein Verfahren der Tiangulation ermittelt werden, wie dies generell für Positionsbestimmungen bekannt ist.

Auf diese Weise kann anhand der von der Auswerteeinheit ausgewerteten Prozessdaten sowie der Daten des GPS-Sensors nicht nur eine Aussage dahingehend getroffen werden, ob und gegebenenfalls welche Umreifungsbandvorrichtung gewartet werden muss. Sondern zusätzlich können diese Angaben zur Wartung auch mit einer Positionsangabe für die betreffende Umreifungsbandvorrichtung ausgerüstet werden, damit beispielsweise Wartungspersonal die betreffende Umreifungsbandvorrichtung unmittelbar findet und der zuvor festgelegten zielgenauen Wartung unterziehen kann.

Dazu kann die Auswerteeinheit beispielsweise ein Wartungsprotokoll für die betreffende Umreifungsbandvorrichtung mit den notwendigen Ortsinformationen ausrüsten und an den Betreiber der Umreifungsbandvorrichtung übermitteln. Je nach beispielsweise Dringlichkeit der Wartung kann das Wartungsprotokoll selbstverständlich und bedarfsweise auch mit einer Alarmnotiz flankiert werden. Die Auswerteeinheit ist zu diesem Zweck vorteilhaft beispielsweise beim Hersteller der Umreifungsbandvorrichtung vorgesehen bzw. dieser hat Zugriff darauf und kann auf diese Weise den Anwender bzw. seine Kunden entsprechend informieren.

Das alles gelingt erfindungsgemäß besonders einfach, intuitiv und zielgenau. Denn die Überwachung etwaiger Wartungen erfolgt anhand von Prozessdaten, die seitens der Umreifungsbanvorrichtung erzeugt und an den Empfänger bzw. die Auswerteeinheit übermittelt werden. Als Folge hiervon lassen sich beispielsweise Wartungsintervalle, etwaige Revisionen etc. zielgenau vornehmen und an den tatsächlichen Bedarf anpassen.

Darüber hinaus ist es möglich, die jeweils betroffene Umreifungsbandvorrichtung nicht nur hinsichtlich ihres Wartungsbedarfes zu identifizieren, sondern auch ihren aktuellen Aufenthaltsort zu bestimmen und an beispielsweise Wartungspersonal zu übermitteln. Dadurch werden Kosten gespart und ist eine dauerhafte Funktionsfähigkeit der Umreifungsbandvorrichtung gegeben. Bei dieser Umreifungsbandvorrichtung kann es sich grundsätzlich um eine stationäre Vorrichtung handeln, mit mit deren Hilfe beispielsweise Stahlumreifungsbänder oder auch Kunststoffumreifungsbänder um großvolumige Güter geschlungen und hieran festgelegt werden, indem die zu verbindenden Bandenden mithilfe des Umreifungskopfes verbunden werden. Generell kann die Umreifungsbandvorrichtung aber auch als Handumreifungsbandvorrichtung ausgebildet sein. In diesem Fall wird die Handumreifungsbandvorrichtung von einem Bediener manipuliert und ist beispielsweise zusätzlich an eine Luftdruckeinheit für einen pneumatischen Betrieb angeschlossen. Grundsätzlich kann hier auch mit einem elektrischen Antrieb und einer schnurlosen Akkuversorgung gearbeitet werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Umreifungsbandvorrichtung in Gestalt einer Handumreifungsbandvorrichtung in einer Übersicht,
- Fig. 2: den Gegenstand nach der Figur 1 schematisch i.V.m. einem zugehörigen Netzwerk und
- Fig. 3: beispielhaft ein Signal der drahtlosen Fernübertragung in Gestalt eines gewobbelten Frequenzimpuls.

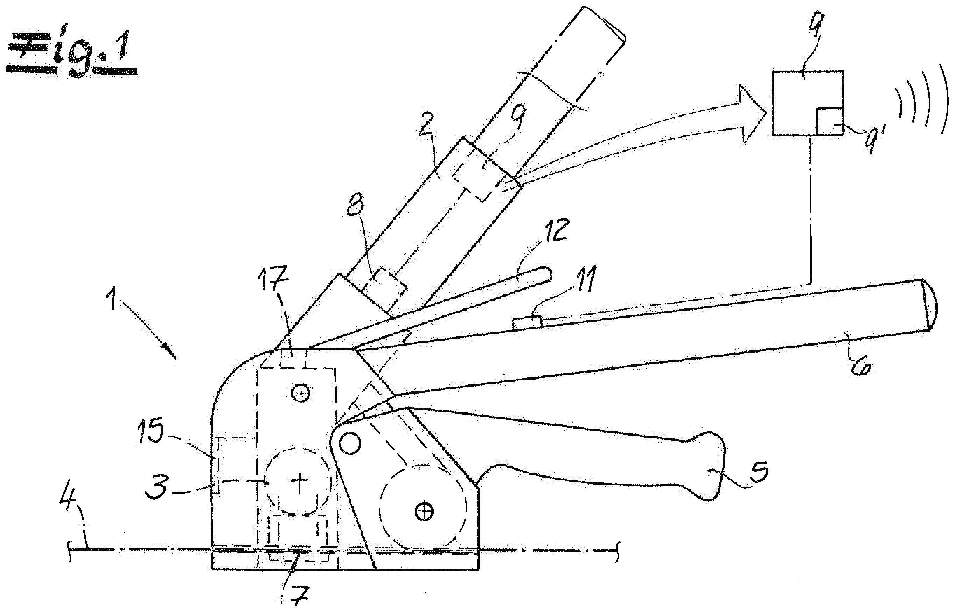

In den Figuren ist eine Umreifungsbandvorrichtung dargestellt, bei der es sich nach dem Ausführungsbeispiel um eine Handumreifungsbandvorrichtung handelt. Diese verfügt über zumindest einen Umreifungskopf 1. Außerdem ist nach dem Ausführungsbeispiel ein motorischer Antrieb 2 realisiert, der im Rahmen der Darstellung nach der Fig. 1 pneumatisch arbeitet, aber auch genauso gut elektrisch funktionieren kann, wobei die zugehörige elektrische Energie in diesem Fall über einen nicht ausdrücklich dargestellten Akkumulator im Gehäuse des Umreifungskopfes 1 zur Verfügung gestellt wird. Der Akkumulator mag zu diesen Fall aufladbar ausgebildet sein. Hierzu kann der Akkumulator aus dem Gehäuse entfernt und ausgetauscht werden. Es ist aber auch möglich, dass der Akkumulator fest im Gehäuse verbaut ist und das Gehäuse mit einer korrespondierenden Ladebuchse zum Aufladen des Akkumulators ausgerüstet ist.

Mithilfe des Antriebes 2 wird nach dem Ausführungsbeispiel ein lediglich angedeutetes Spannrad 3 angetrieben, mit dessen Hilfe das in der Fig. 1 schematisch wiedergegebene Umreifungsband 4 um zu umreifendes Gut gelegt und gespannt wird. Außerdem ist noch ein Hebelarm 5 i.V.m mit einem Betätigungshebels 6 realisiert. Dadurch kann eine Bedienperson durch Erfassen des Hebelarmes 5 und des Betätigungshebels 6 mit der rechten Hand den Umreifungskopf 1 bedienen.

Demgegenüber ist die linke Hand frei, um damit die sich überlappenden Bandenden des Umreifungsbandes 4 in eine schlitzförmige Aufnahme 7 des Gehäuses des Umreifungskopfes 1 einsetzen zu können. Nach dem Einsetzen der sich überlappenden Bandenden des Umreifungsbandes 4 in die schlitzförmige Aufnahme 7 des Gehäuses des Umreifungskopfes 1 wird der Hebelarm 5 losgelassen, sodass das Spannrad 3 für die erforderliche Spannung sorgt. Nach dem Erreichen der gewünschten Bandspannung des Umreifungsbandes 4 kann nach dem Ausführungsbeispiel und nicht einschränkend ein hülsenloser Verschluss der Bandenden durch Betätigen des Betätigungshebels 6 eingebracht werden.

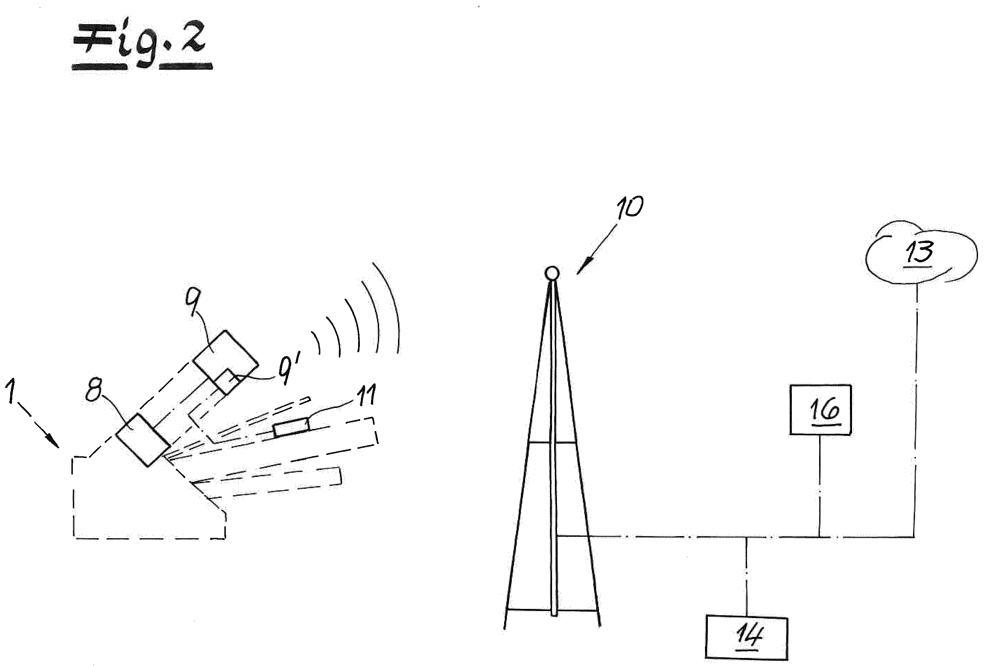

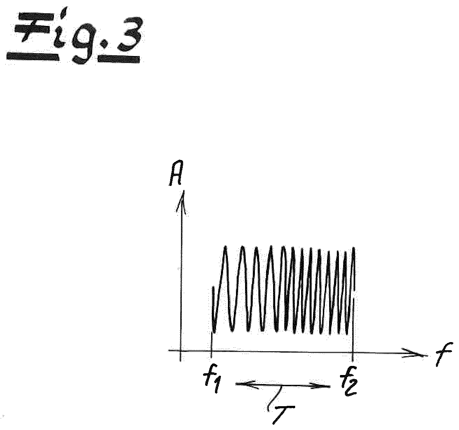

Tatsächlich korrespondiert die Betätigung des Betätigungshebels 6 dazu, dass zwei nicht ausdrücklich dargestellte Werkzeuge gegeneinander gedrückt werden und für den bereits angesprochenen hülsenlosen Verschluss der sich überlappenden Bandenden des Umreifungsbandes 4 sorgen. Nach dem Ausführungsbeispiel ist dem grundsätzlich entbehrlichen motorischen Antrieb 2 im Rahmen des Ausführungsbeispiels im oder am Umreifungskopf 1 ein Prozesssensor 8 zugeordnet, welcher in der Fig. 1 angedeutet ist und in den Fig. 2 und 3 näher in Bezug genommen und erläutert wird. Der Prozesssensor 8 ist dabei an eine Steuereinheit 9 mit einem integrierten oder zusätzlichen Sender 9', angeschlossen. Die Steuereinheit 9 kann dabei in oder am Gehäuse des Umreifungskopfes 1 vorgesehen sein und wird elektrisch mithilfe des nicht ausdrücklich dargestellten Akkumulators versorgt.

Anhand der Fig. 2 wird nun deutlich, dass mithilfe des zur Steuereinheit 9 gehörigen Senders 9', seitens der Umreifungsbandvorrichtung erzeugte Prozessdaten an einen Empfänger 10 im Sinne einer drahtlosen Fernübertragung übermittelt werden können. Die Prozessdaten werden dabei von dem Prozesssensor 8 zur Verfügung gestellt. Dazu mag der Prozesssensor 8 im Rahmen des Ausführungsbeispiels und nicht einschränkend jeweils die Umdrehungen des im Detail nicht dargestellten motorischen Antriebes 2 zählen. Dadurch kann auf eine jeweilige Betätigung des Umreifungskopfes 1 und einen zugehörigen Umreifungszyklus rückgeschlossen werden.

Grundsätzlich lassen sich mithilfe der Steuereinheit 9 inklusive Sender 9', auch andere Prozessdaten im Sinne der in der Fig. 2 angedeutete drahtlosen Fernübertragung an den Empfänger 10 übermitteln, und zwar beispielsweise die in der Beschreibungseinleitung erläuterten Betriebsdaten des Umreifungskopfes 1 ebenso wie Verbrauchsdaten an Umreifungsband 4.

Die drahtlose Fernübertragung vom Sender 9', zum Empfänger 10 erfolgt dabei in Abhängigkeit von Signalen eines Betätigungssensors 11. Dieser Betätigungsensor 11 ist dabei nach dem Ausführungsbeispiel einem Hebel 12 am motorischen Antrieb 2 zugeordnet, mit dessen Hilfe der motorischer Antrieb 2 in Gang gesetzt wird. Sobald also der motorischer Antrieb 2 läuft, um das Umreifungsband 4 zu spannen, korrespondiert hierzu ein Signal des Betätigungssensors 11, welcher an die Steuereinheit 9 angeschlossen ist.

Dadurch kann die drahtlose Fernübertragung zwischen dem Sender 9', und dem Empfänger 10 in Abhängigkeit von Signalen des betreffenden Betätigungssensors 11 erfolgen. Auf diese Weise wird die Steuereinheit 9 nach Maßgabe von Signalen des Betätigungssensors 11 geweckt. Sobald Signale des Betätigungssensors 11 seitens der Steuereinheit 9 nicht mehr registriert werden, weil beispielsweise der Hebel 12 für den Antrieb 2 losgelassen wird, sorgt in der Regel ein der Steuereinheit 9 zugeordnet Timer dafür, dass eine bestimmte Zeitspanne von beispielsweise einer halben Minute, 1 Minute oder mehreren Minuten abläuft. Kommt es innerhalb dieser Zeitspanne nicht zu einer erneuten Betätigung des Hebels 12 und damit des Betätigungssensors 11, geht die Steuereinheit 9 und mit ihr der Sender 9', in einen Ruhemodus über.

Dieser Ruhemodus wird solange beibehalten, bis die Steuereinheit 9 und mit ihr der Sender 9', durch eine erneute Betätigung des Hebels 12 und damit des Betätigungssensors 11 geweckt wird. Auf diese Weise wird insgesamt der elektrische Energieverbrauch der erfindungsgemäßen Umreifungsbandvorrichtung auf ein Minimum reduziert. Denn während des Ruhemodus findet keine drahtlose Fernübertragung zwischen dem Sender 9', und dem Empfänger 10 statt. Die drahtlose Fernübertragung wird dabei entsprechend den Erläuterungen in der einleitenden Beschreibung im Radiofrequenzbereich vorgenommen. Hier hat sich insbesondere der sogenannte Sub-Gigahertz-Bereich als besonders günstig erwiesen. Außerdem erfolgt die drahtlose Funkübertragung nach einem Modulationsverfahren. Tatsächlich werden an dieser Stelle jeweils gewobbelte Frequenzimpulse übermittelt, wie dies die Fig. 3 schematisch darstellt.

Hier erkennt man einen solchen einzelnen gewobbelten Frequenzimpuls, der nämlich entsprechend der Spreizbandtechnologie mit einer durchgängig gleichen Amplitude A arbeitet. Lediglich die Frequenz f ändert sich innerhalb einer festgelegten Zeit T zwischen einer Anfangsfrequenz f₁ und einer Endfrequenz f₂.

Auf diese Weise können die Prozessdaten jeweils digital an den Empfänger 10 übermittelt werden. Hier wird vorteilhaft nach dem LoRa-Standard und mit einer sogenannten CSS-Modulation (Chirp Spread Spectrum) gearbeitet. Dadurch lassen sich maximale Übertragungsraten von bis zu 2 Mbit/s bei Reichweiten bis zu mehreren Kilometern im Freien übertragen. Jeder gewobbelte und in der Fig. 3 dargestellte Frequenzimpuls mag in diesem Zusammenhang zu einem Spreizfaktor von beispielsweise 5 bis 12 korrespondieren, welcher zugleich die Anzahl an übertragenen Bits vorgibt.

Anhand der Fig. 2 erkennt man, dass der Empfänger 10 zusätzlich mit einem Speicher 13 ausgerüstet ist. Bei dem Speicher 13 mag es sich um eine sogenannte "Cloud", also einen Speicher im Internet handeln. Denn der Empfänger 10 stellt ebenso wie der Speicher 13 nach dem Ausführungsbeispiel einen Bestandteil eines zugehörigen Netzwerkes 14, nämlich des Internet, dar. Die vom Umreifungskopf 1 bzw. dessen Sendern 9', an den Empfänger 10 übermittelten Prozessdaten werden nun ihrerseits drahtlos und/oder drahtgebunden über das fragliche Netzwerk 14 übertragen. Dazu liegen die Prozessdaten im Netzwerk als Netzwerkprotokolle vor, wie dies einleitend im Detail bereits beschrieben wurde.

Bei den Prozessdaten handelt es sich typischerweise um Betriebsdaten wie beispielsweise die Anzahl der vom Umreifungskopf 1 absolvierten Zyklen, die Temperatur des motorischen Antriebes 2, den Druck des Pneumaticmediums nach dem Ausführungsbeispiel zum Betrieb des motorischen Antriebes 2 usw. Außerdem ist meistens noch eine Maschinenkennung als Bestandteil der Prozessdaten zu berücksichtigen, um den Umreifungskopf 1 bzw. die zugehörige Umreifungsbandvorrichtung exakt identifizieren zu können. Darüber hinaus umfassen die Prozessdaten typischerweise auch noch Verbrauchsdaten wie beispielsweise den Bandverbrauch an Umreifungsband 4.

Die zuvor angesprochenen Prozessdaten können dabei mithilfe einer lediglich angedeuteten Anzeigeeinheit 15 frontseitig des Gehäuses des Umreifungskopfes 1 unmittelbar am Umreifungskopf 1 sichtbar gemacht werden. Darüber hinaus ist eine Auswerteeinheit 16 vorgesehen, die an das Netzwerk 14 angeschlossen ist und die im Speicher 13 hinterlegten Prozessdaten verarbeitet. Die Auswerteeinheit 19 ist dabei im Bereich oder im Zugriff des Herstellers der betreffenden Umreifungsbandvorrichtung angesiedelt.

Auf diese Weise kann der Hersteller anhand der mithilfe der Auswerteeinheit 16 ausgewerteten Prozessdaten entscheiden, ob beispielsweise Umreifungsband 4 nachgeliefert werden muss, eine Wartung erforderlich ist, gegebenenfalls eine Abschaltung des Motors 2 aufgrund von Überhitzung notwendig wird etc. Diese sämtlichen Informationen lassen sich ausgehend von der Auswerteeinheit 16 an einen Bediener der Umreifungsbandvorrichtung übermitteln, beispielsweise an ein vom Bediener mitgeführtes Mobiltelefon oder einen anderen Empfänger. Hier ist es denkbar, dass der Bediener auf seinem Mobiltelefon eine entsprechende Nachricht beispielsweise in Form einer SMS erhält. Dadurch kann der Bediener entweder selbst Wartungsmaßnahmen einleiten oder für eine Nachbestellung von Umreifungsband 4 sorgen oder unterrichtet die Auswerteeinheit 16 dahingehend, dass eine externe Wartung benötigt wird. Selbstverständlich lässt sich über den skizzierten Weg auch eine Fernwartung der betreffenden Umreifungsbandvorrichtung mithilfe der betreffenden mithilfe der Auswerteeinheit 16 vornehmen. Somit ist beispielsweise der Empfänger 10 zugleich als Sender 9'ausgebildet. Der Sender 9' ist zugleich als Empfänger ausgelegt.

Um in diesem Zusammenhang beispielsweise beim Betrieb verschiedener Handumreifungsbandvorrichtungen auf einem ausgedehnten Gelände eine zielgenaue Wartung zu ermöglichen, ist der Umreifungskopf 1 zusätzlich noch mit einem GPS-Sensor 17 im Innern des Gehäuses des Umreifungskopfes 1 ausgerüstet. Die Signale des GPS-Sensors 17 können dabei zusammen mit den Prozessdaten seitens des Senders 9', an den Empfänger 10 übermittelt werden. Sofern mehrere Empfänger 10 auf dem bereits angesprochenen Gelände vorhanden sind, lässt sich hierdurch zielgenau über beispielsweise eine Triangulation die exakte Position des Umreifungskopfes 1 im Beispielfall ermitteln. Hierzu mögen GPS-Koordinaten gehören, die zusammen mit den Prozessdaten an die Auswerteeinheit 16 übermittelt werden. Dadurch kann beispielsweise Wartungspersonal zielgenau über den Aufenthaltsort der betreffenden Umreifungsbandvorrichtung unterrichtet werden.

## Patentansprüche

1. Vorrichtung, umfassend eine
Umreifungsbandvorrichtung, insbesondere Handumreifungsbandvorrichtung, mit zumindest einem Umreifungskopf (1), ferner mit einem vorzugsweise motorischen Antrieb (2) im oder am Umreifungskopf (1), und mit einem dem Antrieb (2) zugeordneten Prozesssensor (8), welcher wenigstens zur Erfassung von Prozessdaten eingerichtet ist,
die Vorrichtung weiter umfassend einen Empfänger (10) und ein Netzwerk (14),
wobei der Prozesssensor (8) mit dem Empfänger (10) im Sinne einer drahtlosen Fernübertragung verbunden ist, um die Prozessdaten zu übermitteln, wobei ferner
der Empfänger (10) mit einem Speicher (13) für die Prozessdaten ausgerüstet ist, und wobei
der Empfänger (10) sowie der Speicher (13) als Bestandteile des Netzwerkes (14) ausgebildet sind
**dadurch gekennzeichnet, dass**
eine Auswerteeinheit (16) vorgesehen ist, die an das als Internet ausgebildete Netzwerk (14) angeschlossen ist und die eingerichtet ist, im Speicher (13) hinterlegte Prozessdaten zu verarbeiten, und dass die Auswerteeinheit (16) im Bereich oder im Zugriff eines Herstellers der betreffenden Umreifungsbandvorrichtung angesiedelt ist.

2. Vorrichtung nach Anspruch 1, **dadurch gekennzeichnet, dass** die drahtlose Fernübertragung zum Empfänger (10) in Abhängigkeit von Signalen eines Betätigungssensors (11) erfolgt.

3. Vorrichtung nach Anspruch 2, **dadurch gekennzeichnet, dass** der Betätigungssensor (11) an eine Steuereinheit (9) mit Sender (9') angeschlossen ist, welche eingerichtet ist, nach Maßgabe seiner Signale geweckt zu werden und nach einer vorgegebenen Zeitspanne wieder in ihren Ruhemodus zurückzukehren.

4. Vorrichtung nach einem der Ansprüche 1 bis 3, **dadurch gekennzeichnet, dass** die drahtlose Fernübertragung im Radiofrequenzbereich, insbesondere Sub-Gigahertz-Bereich von beispielsweise 800 bis 950 MHz, erfolgt.

5. Vorrichtung nach einem der Ansprüche 1 bis 4, **dadurch gekennzeichnet, dass** die drahtlose Fernübertragung nach einem Modulationsverfahren durchgeführt wird.

6. Vorrichtung nach einem der Ansprüche 1 bis 5, **dadurch gekennzeichnet, dass** die drahtlose Fernübertragung auf Basis gewobbelter Frequenzimpulse erfolgt.

7. Vorrichtung nach Anspruch 6, **dadurch gekennzeichnet, dass** jeder gewobbelte Frequenzimpuls zu einem Spreizfaktor von beispielsweise 5 bis 12 korrespondiert.

8. Vorrichtung nach Anspruch 7, **dadurch gekennzeichnet, dass** der Spreizfaktor die Anzahl an übertragenen Bits vorgibt.

9. Vorrichtung nach einem der Ansprüche 1 bis 8, **dadurch gekennzeichnet, dass** die Prozessdaten Betriebsdaten wie beispielsweise Zykluszahl, Temperatur, Druck oder auch eine Maschinenkennung reflektieren.

10. Vorrichtung nach Anspruch 1 bis 9, **dadurch gekennzeichnet, dass** die Prozessdaten Verbrauchsdaten wie beispielsweise den Bandverbrauch des Umreifungsbandes (4) widerspiegeln.

11. Vorrichtung nach Anspruch 1 bis 10, **dadurch gekennzeichnet, dass** eine Anzeigeeinheit (15) für die Prozessdaten am Umreifungskopf (1) vorgesehen ist.

## Claims

1. Device, comprising a strapping device, in particular manual strapping device, having at least one strapping head (1), further having a preferably motorized drive (2) in or on the strapping head (1), and having a process sensor (8) which is associated with the drive (2) and which is designed at least to acquire process data,
the device further comprising a receiver (10) and a network (14),
wherein the process sensor (8) is connected to the receiver (10) in the form of wireless remote transmission in order to transmit the process data, wherein furthermore the receiver (10) is equipped with a memory (13) for the process data, and wherein
the receiver (10) and the memory (13) are designed as components of the network (14)
**characterized in that**
an evaluation unit (16) is provided, which is connected to the network (14) designed as the internet and which is designed to process process data stored in the memory (13), and **in that** the evaluation unit (16) is located in the region of or is accessible to a manufacturer of the strapping device in question.

2. Device according to Claim 1, **characterized in that** the wireless remote transmission to the receiver (10) takes place as a function of signals from an actuating sensor (11) .

3. Device according to Claim 2, **characterized in that** the actuating sensor is connected to a control unit (9) with a transmitter (9'), which is designed to be woken up according to its signals and to return to its sleep mode after a predetermined period of time.

4. Device according to one of Claims 1 to 3, **characterized in that** the wireless remote transmission takes place in the radio frequency range, in particular sub gigahertz range of, for example, 800 to 950 MHz.

5. Device according to one of Claims 1 to 4, **characterized in that** the wireless remote transmission is carried out according to a modulation method.

6. Device according to one of Claims 1 to 5, **characterized in that** the wireless remote transmission takes place based on swept frequency pulses.

7. Device according to Claim 6, **characterized in that** each swept frequency pulse corresponds to a spreading factor of, for example, 5 to 12.

8. Device according to Claim 7, **characterized in that** the spreading factor specifies the number of transmitted bits.

9. Device according to one of Claims 1 to 8, **characterized in that** the process data reflects operating data such as the number of cycles, temperature, pressure or even a machine identifier.

10. Device according to one of Claims 1 to 9, **characterized in that** the process data reflects consumption data such as the strap consumption of the strap (4).

11. Device according to one of Claims 1 to 10, **characterized in that** a display unit (15) is provided for the process data on the strapping head (1).

## Revendications

1. Dispositif comprenant un dispositif de bande de cerclage (1), en particulier un dispositif de bande de cerclage manuel, en plus avec un système d'entraînement (2), de préférence motorisé, dans ou sur la tête de cerclage (1) et avec un capteur de processus (8) attribué au système d'entraînement (2), lequel est agencé au moins pour saisir des données de processus,
le dispositif comprenant en plus un récepteur (10) et un réseau (14),
sachant que le capteur de processus (8) est relié au récepteur (10) au sens d'une télétransmission sans fil pour transmettre les données de processus, sachant en plus que le récepteur (10) est équipé d'une mémoire (13) pour les données de processus, et sachant que
le récepteur (10) ainsi que la mémoire (13) sont constitués sous la forme de composants du réseau (14)
**caractérisé en ce qu'**
une unité d'évaluation (16) est prévue, qui est raccordée au réseau (14) constitué sous la forme de réseau Internet et qui est agencée pour traiter dans les données de processus mémorisées dans la mémoire (13) et **en ce que** l'unité d'évaluation (16) est située à proximité ou à portée d'un fabricant du dispositif de bande de cerclage concerné.

2. Dispositif selon la revendication 1, **caractérisé en ce que** la télétransmission sans fil au récepteur (10) a lieu en fonction des signaux d'un capteur d'activation (11) .

3. Dispositif selon la revendication 2, **caractérisé en ce que** le capteur d'activation (11) est raccordé à une unité de commande (9) avec un émetteur (9'), laquelle est agencée pour être déclenchée en raison de ses signaux et replacée dans son mode de repos au bout d'un laps de temps prédéfini.

4. Dispositif selon l'une quelconque des revendications 1 à 3, **caractérisé en ce que** la télétransmission sans fil a lieu dans la gamme des radiofréquences, en particulier la gamme de sub-gigahertz, par exemple, de 800 à 950 MHz.

5. Dispositif selon l'une quelconque des revendications 1 à 4, **caractérisé en ce que** la télétransmission sans fil est effectuée selon un procédé de modulation.

6. Dispositif selon l'une quelconque des revendications 1 à 5, **caractérisé en ce que** la télétransmission sans fil a lieu sur la base d'impulsions de fréquence vobulées.

7. Dispositif selon la revendication 6, **caractérisé en ce que** chaque impulsion de fréquence vobulée correspond à un facteur d'écartement, par exemple, de 5 à 12.

8. Dispositif selon la revendication 7, **caractérisé en ce que** le facteur d'écartement prédéfinit le nombre en bits transmis.

9. Dispositif selon l'une quelconque des revendications 1 à 8, **caractérisé en ce que** les données du processus réfléchissent les données de fonctionnement comme par exemple le nombre de cycles, la température, la pression ou également une identification de machine.

10. Dispositif selon les revendications 1 à 9, **caractérisé en ce que** les données du processus reflètent les données de consommations comme par exemple la consommation de bande de la bande de cerclage (4).

11. Dispositif selon les revendications 1 à 10, **caractérisé en ce qu'**une unité d'affichage (15) est prévue sur la tête de cerclage (1) pour les données du processus.
